# EUROPÄISCHE PATENTANMELDUNG

(11) **EP 0 724 112 A1**
(43) Veröffentlichungstag der Anmeldung: **31.07.1996**
(21) Anmeldenummer: 96101190.5
(22) Anmeldetag: 29.01.1996
(51) Int. Cl.: F16S 3/04, E04B 1/61, E02D 5/08, E02D 5/12, F16B 5/00

(54) **Profilstab und dessen Verwendung**

(30) Priorität: 30.01.1995 CH 242/95
(71) Anmelder: Köchli-Bucheli, Alois, 6038 Gisikon (CH)
(72) Erfinder: Köchli, Edgar, CH-6253 Uffikon (CH)
(74) Vertreter: Hotz, Klaus, Dipl.-El.-Ing./ETH Patentanwalt

(57) **Zusammenfassung**

**Profilstab und dessen Verwendung. Die Profilwandungen bestehen aus Schenkeln (1,2,3,4,5,6)**, die eine polygonähnliche, im Minimum 360 grad umlaufende Spirale bilden. Der Profilstab **(9)** ist mit einem gleichen, um 180 grad um die Profillängsachse **(A)** gedrehten Profilstab **(19)** zusammensteckbar. Umläuft die Spirale 360 grad, entsteht ein Führungselement;umläuft sie mehr als 360 grad, entsteht ein Profilstab **(9)** mit parallelen, benachbarten Schenkeln **(1,5;2,6,)**, zwischen welche im zusammengesteckten Zustand ein zu ihnen paralleler Schenkel **(13;14)** des weiteren Profilstabs **(19)** in der Art eines Schiebesitzes, was eine Führung ergibt, oder in der Art eines Pressitzes, was eine Verbindung ergibt, zu liegen kommt. Der Abstand benachbarter Schenkel ist im praktisch gleich der Wandstärke **(s)** der Schenkel, jedoch bei einem Schiebesitz etwas grösser als bei einem Presssitz.

## Beschreibung

Die Erfindung bestrifft einen Profilstab nach dem Oberbegriff des Patentanspruchs **1** sowie dessen Verwendung nach dem Oberbegriff des Patentanspruchs **6**.

Führungs- und Verbindungselemente werden in vielen Bereichen benötigt, beispielsweise zum Verbinden plattenförmigen Materials für Gebäude und Einrichtungen derselben, als Stell-, Träger- oder Gleitschienen bei Möbeln jeglicher Art und zur gegenseitigen Fixierung verschiedener Teile im Apparate- und Machinenbau. Dabei wird an jedem der zu führenden oder zu verbindenden Bauteile ein Führungs- oder Verbindungselement befestigt, welche nicht gleich ausgebildet sein müssen, und die Führung oder Verbindung ergibt sich durch das Zusammenwirken der beiden Führungs- oder Verbindungselemente.

Die Verwendung von profili±rtem Material zu solchen Zwecken ist bekannt; häufig verwendete Profile sind solche, die sich als Nut-Profile verwenden lassen, T-Profile, Doppel-T-Profile, L-Profile, U-Profile, Schwalbenschwanz-Profile und ähnliche offene Profile; in gewissen Fällen gelangen trotz dadurch im allgemeinen erschwerter Montage auch Hohlprofile zur Verwendung. Anstelle von profiliertem Material werden häufig auch Gewinde/Mutter-Kombinationen eingesetzt.

Führungselemente werden verwendet, wenn zwei Bauteile so zu verbinden sind, dass sie sich relativ zueinander bewegen können, sei es um eine Achse drehend oder längs einer Achse verschiebbar; Profilstäbe der eingangs genannten Art dienen naturgemäss als Führungselemente für längenverschiebbare Teile.

Verbindungselemente werden verwendet, wenn zwei Bauteile fest miteinander zu verbinden sind. Mitunter werden auch kombinierte Element_ verwendet, die sowohl als Führungs- wie auch als Verbindungselemente wirken; zu diesem Zwecke müssen solche Elemente eine gewisse Elastizität aufweisen und/oder es müssen zusätzliche Arretiervorrichtungen vorgesehen werden.

Die **EP-0 592 852** beschreibt ein solches Führungselement an einem Bein eines höhenverstellbaren Tisches. Dabei dient als gewissermassen ortsfestes Führungselement ein achteckiges Tischbein. Um dieses Tischbein ist ein längen- bzw. höhenverschiebbares Führungselement angeordnet, das ein äusserst kompliziertes, gitterartiges Profil aufweist, welches in keiner Weise universell verwendbar ist.

Die **US-PS 4 752 102** beschreibt eine Einrichtung, mittels welcher verschiedene Gegenstände wie beispielsweise eine Hebebühne auf einem LKW oder ein Patientenstuhl für zahnärztliche Behandlung höhenverstellbar ausgebildet werden können. Dabei handelt es sich um eine übliche Gewinde/Mutter-Kombination zur eigentlichen Höhenverstellung, während die sich relativ zueinander verschiebenden Teile nicht aneinander gleiten sondern mittels Rollen aneinander abrollen. Auch diese Einrichtung ist im Aufbau sehr kompliziert.

Die Aufgaben der Erfindung werden somit darin gesehen,
- erstens einen Profilstab der eingangs genannten Art zu schaffen, aus welchem man durch Ablängen zusammenwirkende Führungselemente erhält, die universell verwendbar sind und die sich sowohl bezüglich ihrer Herstellung wie auch bezüglich ihrer Montage und Bedienung durch Einfachheit auszeichnen; und
- zweitens die Verwendung eines solchen Profilstabes aufzuzeigen.

Diese Aufgaben werden erfindungsgemäss gelöst
- für den Profilstab durgh die Merkmale des kennzeichnenden Teils des Patentanspruchs **1**; - für die Verwendung des Profilstabes durch die Merkmale des
   kennzeicnenden Teils des Patentanspruchs **6**.

Weitere Einzelheiten und bevorzugte Ausführungsbeispiele werden durch die jeweiligen abhängigen Patentansprüche definiert.

Der erfindungsgemässe Profilstab ist einfach in seiner Herstellung und Verwendung. Ein weiterer, wesentlicher Vorteil besteht darin, dass zusammenwirkende Führungs- bzw. Verbindungselemente an verschiedenen Bauteilen aus Profilstäben mit demselben Querschnitt, bei geringen benötigten Längen auch aus Abschnitten desselben Profilstabes, bestehen. Der neu_ Profilstab ist für alle oben genannten und eine Vielzahl weiterer Verwendungszwecke geeignet.

Erfindungsgemäss weist der neue Profilstab ein offenes Profil auf, das durch mehrere, mindestens aber drei Schenkel gebildet wird. Diese Schenkel sind so angeordnet, dass sie eine Art Spirale formen, die aber nicht durch eine Kurve sondern durch eine Art Polygon gebildet wird, wobei die Schenkel die Seiten des Polygons bilden. Die Spirale läuft um mindestens 360 grad um, da sonst keine einwandfreie Längsführung gewährleistet ist. Die Schenkel sind bezüglich ihrer Längen und Dicken so bemessen, dass der Profilstab 6it einem weiteren Profilstab, der dasselbe Profil aufweist, zusammensteckbar ist, wene der weitere Profilstab gegenüber dem erstgenannten Profilstab um einen geeigneten Winkel um die Profillängsachse gedreht ist. Dieser Winkel ist abhängig von der Anzahl der Schenk l und vom Winkel, den zwei aufeinanderfolgende Schenkel eines Profilstabes einschliessen; er muss so gewählt werden, dass die Schenkel des einen Profilstabes parallel zu gen Schenkeln des anderen Profilstabes ausgerichtet sind. Im zusammengesteckten Zustand liegen dann jeweils die Schenkel des einen Profilstabes an den zu ihnen parallelen Schenkeln des anderen Profilstabes an. Die aneinander anliegenden Flächen der Schenkel dienen dabei als Führungsflächen.

Es liegt auf der Hand, dass der Profilstab mindestens drei Schenkel aufweisen muss. Die Verwendung des Profilstabes ist aber bedeutend einfacher, wenn er ein annähernd rechteckiges oder quadratisches Profil aufweist. Dies erreicht man, wenn der Winkel, den aufeinanderfolgende Schenkel des Profilstabes einschliessen, annähernd 90 grad beträgt. In diesem Falle sind mindestens vier Schenkel vorzusehen, damit die sogenannte Spirale um 360 grad umläuft.

Bei einer bevorzugten Ausführungsform, bei welcher aufeinanderfolgende Schenkel 90 grad einschliessen, werden fünf Schenkel vorgesehen, wobei der fünfte Schenkel parallel zum ersten Schenkel verjäuft, je nach betrachtungsweise inner- oder ausserhalb desselben. Der Abstand zwischen den parallelen Schenkeln eines Profilstabes ist im wesentlichen gLeich der Wandstärke der Schenkel. Dies hat zur Folge, dass im zusammengesteckten Zustand je ein Schenkel von jedem Profilstab zwischen die zwei parallelen Schenkel des jeweils anderen Profilstabes zu liegen kommt. Diese gewissermassen eingeklemmten Schenkel liegen auf einander gegenüberliegenden Seiten des Profils.

Wählt man die Wandstärke der Schenkel um ein Weniges geringer als den gegenseitigen Abstand der parallelen Schenkel eines Profilstabes, so erhält man eine gleitsitzartige Führung. Wählt man die Wandstärke entsprechend grösser, so erhält man eine presssitzartige Verbindung. Es wird aber darauf hingewiesen, dass auch die Elastizität des Profiles sowie die Reibungseigenschaften des verwendeten Materials, das beispielsweise Holz, Metall oder Kunststoff sein kann, einen Einfluss darauf haben, ob man einen Gleitsitz oder einen Presssitz erhält.

Die Führung bzw. die Verbindung wird verbessert, wenn bei einem Profil, dessen Schenkel annähernd 90 grad einschliessen, sechs Schenkel vorgesehen werden, da dann auf jeder der vier Profilseiten ein Schenkel des einen Profilstabes zwischen zwei Schenkeln des anderen Profilstabes gewissermassen eingeklemmt ist.

Die Schenkel weisen im allgemeinen eine konstante Wandstärke auf. Für eine optimale Führung oder Verbindung werden die Schenkellängen so gewählt, dass der auf der Spirale zuäusserst angeordnete Schenkel der längste ist, und dass jeder weitere Schenkel um ein geeignetes Vielfaches der Wandstärke der Schenkel kürzer ist, derart, dass die Abstände zwischen zwei parallelen, benachbarten Schenkeln mindestens annähernd gleich gross ist wie die Wandstärke der Schenkel.

Bei der Verwendung des Profilstabes zur Erzeugung einer Führung oder Verbindung wird so vorgegangen, dass ein erster Profilstab oder gegebenenfalls fluchtende Abschnitte eines solchen an einem Bauteil befestigt werden, und dass ein weiterer Profilstab oder gegebenenfalls ebenfalls nur fluchtende Abschnitte eines solchen an einem weiteren, mit dem ersten Bauteil zu verbindenden oder an ihm zu führenden Bauteil befestigt werden. Durch das Zusammenstecken der beiden Profilstäbe bzw. ihrer Abschnitte enthält man zusammenwirkende Verbindungs- bzw. Führungselemente.

Es kann sich aus ästhetischen oder praktischen Grunden als günstig erweisen, die Profilstäbe in Nuten der Bauteile zu befestigen, welche so bemessen sind, dass im montierten Zustand der Bauteile diese flächenbündig aufeinander aufliegen.

Die Befestigung der Profilstäbe an den Bauteilen kann beispielsweise mittels Klebung erfolgen; bevorzugt erfolgt sie aber mechanische Klettverschlusstechnik und/oder Schraubung.

Weitere Vorteile der Erfindung sowie bevorzugte Ausführungsbeispiele des Profilstabes werden im folgenden mit Bezug auf die Zeichnung ausführlich beschrieben. Dabei zeigen
- **Fig. 1a**: Einen quadratischen Profilstab in axonometrischer Darstellung mit zwei Profilstücken, wovon das zweite in zum ersten gedrehter Anordnung gezeichnet ist, so dass es gegen die Pfeilrichtung verschoben, in das erste Profilstück einschiebbar ist,
- **Fig. 1b**: zwei in Eingriff stehende Profilstücke des quadratischen Profilstabes,
- **Fig. 2**: eine Variante mit einem rechteckigen Profilstab in axonometrischer Darstellung,
- **Fig. 3**: eine weitere Variante mit einem achteckig geformten Profilstab in axonimetrischer Darstellung,
- **Fig. 4**: eine zusätzliche Variante mit liegend rechteckigem Profilstab mit besonders günstiger Flächenkraftaufnahme in axonometrischer Darststellung,
- **Fig. 5**: eine lageveränderte Version eines ähnlichen Profilstabes wie in **Fig. 3**, aber als 6-Eck ausgebildet.

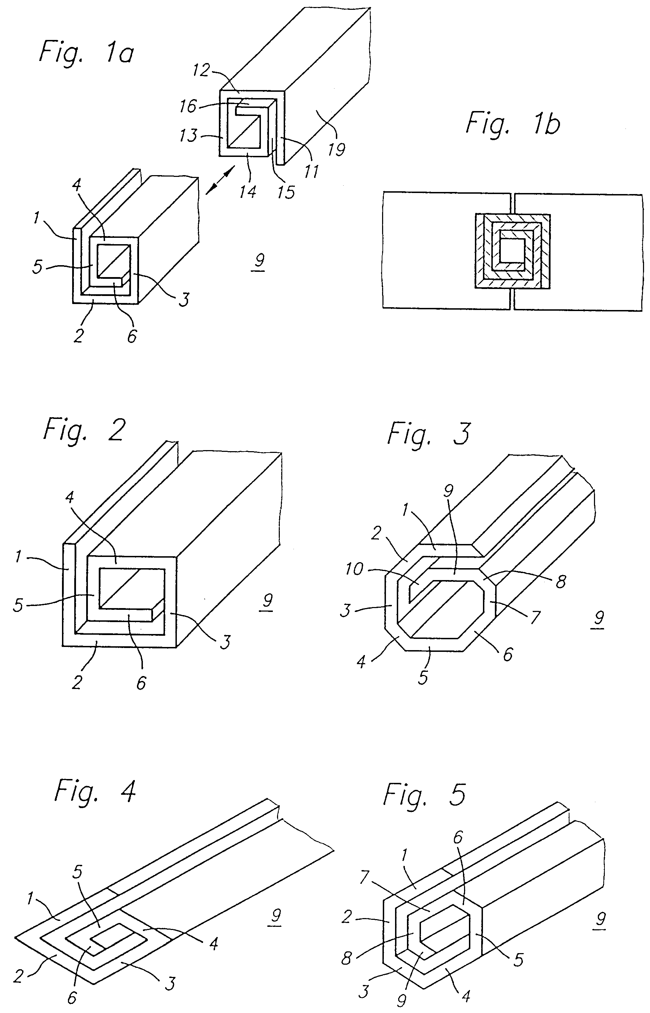

Der Profilstab **9** der Figuren **1a** und **1b** weist ein Profil auf, das aus sechs aufeinanderfolgenden Schenkeln **1, 2, 3, 4, 5, 6** besteht. Benachbarte Schenkel schliessen jeweils einen Winkel von 90 grad ein. Die Schenkel **1** bis **6** bilden somit eine Spirale, die aber nicht längs einer Kurve sondern etwa längs eines ungefähren Polygons verläuft, wobei die vier äusseren Schenkel **1** bis **4** ungefähr ein Quadrat bilden, das aber, da der Schenkel **4** kürzer ist als der Schenkel **2**, nicht geschlossen ist.
Der äusserste Schenkel **1** ist der längste. Der Schenkel **2** ist um die Länge s, die der Wandstärke der Schenkel entspricht, kürzer als der Schenkel **1**. Der Schenkel **3** ist gleich lang wie der Schenkel **2**. Der Schenkel **4** ist um 2s kürzer als die Schenkel **2** und **3**. Der Schenkel **5** ist gleich lang wie der Schenkel **4** und der Schenkel **6** ist um um 3s kürzer als der Schenkel **2**. Durch die Wahl dieser Längen der Schenkel erreicht man, dass die Abstände benachbarter paralleler Schenkel **1, 5** sowie **2, 6** gleich gross sind wie die Wandstärke s aller Schenkel. Diese Abmessungen können um ein Weniges nach oben oder unten abweichen, wie später erläutert wird.

Ein um die Profillängsachse **A** um 180 grad gedrehter weiterer Profilstab **19**, der gestrichelt dargestellt ist und der dasselbe Profil aufweist wie der Profilstab **9**, kann daher mit dem Profilstab **9** zusammengesteckt werden. Die beim Profilstab **9** mit **1** bis **6** bezeichneten Schenkel werden beim Profilstab **19** mit **11** bis **16** bezeichnet. Im zusammengesteckten Zustand befindet sich ein Schenkel **13** des weiteren Profilstabes **19** zwischen den Schenkeln **1** und **5** des Profilstabes **9**, ebenso ein Schenkel **14** zwischen den Schenkeln **2** und **6**. Gleichzeitig befindet sich der Schenkel **3** zwischen den Schenkeln **11** und **15** und der Schenkel **4** zwischen den Schenkeln **12** und **16**.

Jede der vier Seiten des durch die Schenkel gebildeten annähernden Quadrates (siehe **Fig. 1b**) wird im zusammengesteckten Zustand also gewissermassen von drei parallelen Schenkeln gebildet, wodurch man eine verwindungssteife Anordnung erhält. Der jeweils mittig angeordnete Schenkel ist in der Art eines Schiebe- oder Presssitzes zwischen den beiden anderen Schenkeln aufgenommen ist. Einen Schiebesitz erhält man, wenn die Abstände paralleler, benachbarter Schenkel der Profilstäbe um ein Weniges grösser sind als die Wandstärke der Schenkel und/oder die inneren Schenkel elastisch nach Innen ausweichen; einen Presssitz erhält man, wenn die genannten Abstände eher grösser sind als die Wandstärke und/oder die inneren Schenkel nicht elastisch ausweichen. Durch einen Schiebesitz erhält man eine Führung zwischen zwei Bauteilen, durch einen Pressitz eine Verbindung von zwei Bauteilen.

Bei den in den **Fig. 2 bis 5** dargestellten Profilstäben wurden für entsprechende Teile die gleichen Ueberweisungszeichen verwendet wie in **Fig. 1a**; vier bzw. drei zusätzliche Schenkel der Profilstäbe **9** in den **Fig. 3 bzw. 5** werden fortlaufend mit **7, 8, 9, 10** in **Fig. 3 bzw. 7, 8, 9 in Fig. 5** bezeichnet.

Die in **Fig. 2** und **Fig. 4** dargestellten Profilstäbe sind im Aufbau dem in **Fig. 1a** dargestellten Profilstab sehr ähnlich, der einzige Unterschied besteht darin, dass das die sogenannte Spirale bildende Polygon im wesentlichen nicht ein Quadrat wie in **Figuren 1a und 1b** sondern in **Fig. 2** ein Rechteck und in **Fig. 4** ein Parallelogramm ist. Die Wirkungsweise dieser Profilstäbe ist genau gleich wie diejenige des Profilstabes der **Fig. 1a**.

Die **Fig. 3** und **5** zeigen Profilstäbe, bei denen die sogenannte Spirale vieleckige, annähernd reguläre Polygone bildet, nämlich in **Fig. 3** im wesentlichen ein 8-Eck und in **Fig. 5** im wesentlichen ein 6-Eck. Entsprechend schliessen aufeinanderfolgende Schenkel grössere Winkel ein, nämlich 135 grad beim 8-Eck und 120 grad beim 6-Eck. Die Wirkungsweise dieser Profilstäbe ist im wesentlichen gleich wie mit Bezug auf **Figuren 1a und 1b** beschrieben wurde.

## Patentansprüche

1. Profilstab **(9)**, insbesondere zur Verwendung als Führungs-oder Verbindungselement, mit Profilwandungen, die durch ebene Schenkel **(1 - 10)** gebildet sind,
**dadurch gekennzeichnet,**
dass die Profilwandungen aus n Schenkeln **(1 - 10)** bestehen, wobei n mindestens vier ist, welche im Profilquerschnitt eine um mindestens (n/(n-1)) mal 360 grad laufende, einem Polygon mit mindestens (n - 1) Ecken ähnliche Spirale bilden und so gestaltet sind, dass der genannte Profilstab **(9)** mit einem weiteren, gleichen, um die Profillängsachse **(A)** gedreht angeordneten rofilstab **(19)** teleskopartig längsverschieblich zusammensteckbar ist, wobei mindestens ein Schenkel **(1 - 10)** des erstgenannten Profilstabes **(9)** dazu bestimmt sind, im zusammengesteckten Zustand an zu ihm parallelen benachbarten Schenkeln **(11 - 18)** des weiteren Profilstabes **(19)** anzuliegen.

2. Profilstab **(9)** nach Patentanspruah **1**,
**dadurch gekennzeichnet,**
dass er aus mindestens fünf Schenkeln besteht, wobei je zwei aufeinanderfolgende Schenkel einen Winkel von mindestens annähernd 90 grad einschliessen.

3. Profilstab **(9)** nach Patentanspruch **2**,
**dadurch gekennzeichnet,**
dass im zusammengesteckten Zustand einer der Schenkel schiebe- oder pressitzartig zwischen zwei diesem Schenkel parallelen Schenkeln des anderen Profilstabes **(19)** angeordnet ist.

4. Profilstab **(9)** nach Patentanspruch **2**,
**dadurch gekennzeichnet,**
dass die Profilwandungen aus sechs Schenkeln **(1 - 6)** bestehen, wobei im zusammengesteckten Zustand die beiden mittleren Schenkel **(3; 4)** schiebe- oder pressitzartig zwischen je zwei zu ihnen parallelen Schenkeln **(1,5; 2,6)** des anderen Profilstabes **(19)** angeordnet sind.

5. Profilstab **(9)** nach Patentanspruch **2**,
**dadurch gekennzeichnet,**
dass der auf der Spirale zuäussert liegende, erste Schenkel **(1)** der längste Schenkel ist, und dass jeder der auf ihn folgenden Schenkel **(2 - 6)** um mindestens annähernd das doppelte der Wandstärke **(s)** der Schenkel **(1 - 5)** kürzer ist als der jeweils vorangehende Schenkel **(1 - 5)**, derart, dass die Abstände zwischen benachbarten, parallelen Schenkeln **(1,5; 2,6)** mindestens annähernd gleich sind wie die genannte Wandstärke **(s)**.

6. Verwendung des Profilstabes **(9)** nach den Patentansprüchen **1 - 5**, um ein erstes Bauteil und ein zweites Bauteil aneinander zu führen oder miteinander zu verbinden,
**dadurch gekennzeichnet,**
dass der äusserste Schenkel **(1)** des Profilstabes **(9)** am ersten Bauteil und ein weiterer, gleicher Profilstab **(19)** am zweiten Bauteil befestigt ist.

7. Verwendung nach Patentanspruch **6**,
**dadurch gekennzeichnet,**
dass jeder Profilstab **(9, 19)** in einer Nut seines Bauteiles befestigt ist, wobei die Abmessungen der Nut so gewählt sind, dass im montierten Zustand der Bauteile diese flächenbündig aufeinander aufliegen.

8. Verwendung nach Patentanspruch **6**,
**dadurch gekennzeichnet,**
dass der Profilstab (9) durch mechanische Verbindung, insbesondere durch Widerhakenverbindung und/oder Schrauben, am Bauteil befestigt ist.
